# EUROPEAN PATENT SPECIFICATION

(11) **EP 1 441 981 B1**
(45) Date of publication and mention of the grant of the patent: **14.11.2007**
(21) Application number: 01928258.1
(22) Date of filing: 03.05.2001
(51) Int. Cl.: C01B 3/38, C01B 3/02

(54) **REACTOR FOR REFORMATION OF NATURAL GAS AND SIMULTANEOUS PRODUCTION OF HYDROGEN**
REAKTOR ZUR REFORMIERUNG VON ERDGAS UND GLEICHZEITIGE HERSTELLUNG VON WASSERSTOFF
REACTEUR POUR LE REFORMAGE DE GAZ NATUREL ET LA PRODUCTION SIMULTANEE D' HYDROGENE

(30) Priority: 05.05.2000 NO 20002378
(43) Date of publication of application: 04.08.2004
(73) Proprietor: Statoil ASA, 4035 Stavanger (NO)
(72) Inventor: RYTTER, Erling, N-7049 Trondheim (NO)
(74) Representative: Rees, David Christopher
(86) International application number: PCT/NO2001/000183
(87) International publication number: WO 2001/085608

(56) References cited:
- EP-A1- 0 640 559
- WO-A1-00/18680
- GB-A- 1 039 382

## Description

The present invention regards a method of reforming a feed gas, as well as a reactor for implementing the method. In particular, the invention regards such a method and reactor in which an internal separation or extraction of hydrogen takes place inside the reactor.

### Background to the invention

The following processes are central in the reformation of natural gas:

| | | |
|---|---|---|
| CH₄ + H₂O | = CO + 3H₂O | Steam reforming |
| CH₄ + ½ O₂ | = CO + 2H₂ | Partial oxidation |
| CO + H₂O | = CO₂ + H₂ | Shift reaction |

The steam reforming is highly endothermic, and the heat required for the reaction may be obtained either through external heating or by combining steam reforming with the exothermic partial oxidation in an autothermal reformer (ATR). An autothermal reformer generally operates at a temperature of around 1000 °C and at a pressure of around 30 to 40 bar. Such reformers are prior art, and are applied in many plants for processing of hydrocarbon feeds such as natural gas.

Conventional autothermal reformers for reforming of hydrocarbon feed such as natural gas or partially reformed natural gas have some disadvantages:
- The outlet temperature of the gas from an ATR is relatively high, e.g. around 1000 °C. A high outlet temperature is undesirable for two reasons.
   a) A high heat exchange capacity is required in order to cool the waste gas.
   b) There is a risk of metal dusting due to Boudard's reaction, a reaction that increases with a high temperature and a high CO₂/CO ratio.
- It is difficult to optimise the composition of the outlet gas according to the purpose for which it is to be used, and such optimisation may require expensive extra equipment and energy consuming processes.
- High cost of O₂-production

The various processes or subprocesses in a process plant often require the components of the outlet gas from the ATR. It may in particular be necessary to regulate the hydrogen content, e.g. by separating the hydrogen from the rest of the outlet gas downstream of the ATR outlet, and add hydrogen to processes and subprocesses that require hydrogen. This separation of hydrogen normally includes amine cleaning, PSA (Pressure Swing Adsorption) or similar in order to remove undesirable components, or separation of hydrogen by means of a hydrogen membrane.

By direct removal of the hydrogen from the reaction mixture in the reformer, the equilibrium of the reaction will shift towards CO₂ and hydrogen, leaving the ideal overall reaction as:

CH₄ + H₂O + ½ O₂ = CO₂ + 3H₂

Solutions are previously known in which hydrogen is removed from a reaction mixture in a reactor.

As such, a method is known from DE 1 467 035 for production of hydrogen gas by conversion of water vapour and hydrocarbons in a reforming reactor. This is not an autothermal reactor, as the heat required for steam reforming is obtained by combustion of the outlet gas from the reactor after hydrogen has been removed from this, where hydrogen that has not passed through the membrane is combusted outside of the reactor along with other combustible reforming products in order to provide sufficient heat for the reaction. Here, it should be pointed out that the amount of hydrogen that diffuses through the membrane is set so as to leave "residual" hydrogen, in order to ensure that sufficient heat is produced in the external combustion.

US 5 741 474 also describes a method of producing hydrogen with a high purity from a reaction mixture comprising hydrocarbons or oxygen-containing hydrocarbons, water vapour and oxygen in a reforming reactor. The hydrogen that is formed is extracted from the reactor through a membrane permeable to hydrogen. The outlet gas from the reactor, which does not pass through the membrane permeable to hydrogen, is combusted, the heat of combustion being used to heat the reforming of hydrocarbon, water and oxygen or air. Thus this is not an autothermal reactor but a reactor requiring external heat input.

US 5 637 259 describes a method for producing synthesis gas and hydrogen from a mixture of methane and oxygen, methane and CO₂ or a mixture of methane, CO and oxygen. The desired products are hydrogen and CO, and the shift reaction is more or less absent in the absence of added water vapour.

GB 2 283 235 also describes a system for production of hydrogen from a hydrogencontaining material, water vapour and oxygen. At least part of the by-product gases is here recycled to the reactor. The reformer is a combined autothermal reformer containing in its catalyst bed two catalysts, a combustion catalyst for promoting the partial oxidation and a reforming catalyst, along with a membrane for separation of hydrogen.

Thus it is an object of the present invention to provide a reformer for hydrocarbon feeds such as natural gas or partially reformed natural gas, which method overcomes the drawbacks of a traditional ATR, and in which hydrogen is produced at a sufficient purity to be used in subsequent processes.

According to the invention, there is provided a reactor for reforming a feed gas comprising natural gas and/or a preformed natural gas, water vapour and an oxygen-containing gas, where the reactor comprises a catalyst bed for autothermal reforming of the feed gas, in which catalyst bed is disposed a membrane that it permeable to hydrogen, the purpose of which is to separate the gas stream flowing through the catalyst bed into a first stream primarily containing H₂ and a second, low hydrogen stream primarily containing CO₂, water vapour and CO, in addition to any inert gases and some unconverted feed gas, characterised in that the reactor also comprises a catalyst free zone for heating of the incoming feed gas through partial combustion of the feed gas before this reaches the catalyst bed.

The present invention enables a method for reforming of a feed gas comprising natural gas and/or a prereformed natural gas, water vapour and an oxygen-containing gas in an autothermal reactor, characterised in that the feed gas is first conducted through a catalyst free zone of the reactor, in which zone the feed gas is partially combusted in an exothermic oxidation reaction and partially reformed, that the hot, partially combusted and reformed gas is led further through a catalyst bed for further reforming so as to create a reformed gas stream, and that the reformed gas stream is separated into a first stream primarily comprising H₂ an a second, low hydrogen stream primarily comprising CO₂, water vapour and CO, and possibly inert gases, along with some unconverted feed gas, by means of a membrane that is permeable to hydrogen, which membrane is located in the catalyst bed.

According to a preferred embodiment, the second low hydrogen stream is used as feed gas to a Fischer-Tmpsch reactor or a reactor for synthesis of oxygenates such as e.g. methanol.

According to a second preferred embodiment, the second, low hydrogen stream is disposed of in a reservoir.

The products obtained according to the present invention comprise:
- a hydrogen rich stream, which in the present invention is also referred to as permeate, which is extracted from the reformer through the membrane that is permeable to hydrogen and is located in the reformer, and
- a stream with a lower hydrogen content, in the present invention also referred to as retentate and synthesis gas.

The method and reformer according to the present invention have, among others, the following advantages over conventional ATR technology:
- An internal membrane permeable to hydrogen provides a flexible and efficient system for production of hydrogen and synthesis gas at various ratios.
- The hydrogen production may be increased significantly.
- Downstream purification systems for hydrogen may be removed for most hydrogen applications, or the systems may be simplified.
- The composition of the products from the reformer, the synthesis gas, may be tailored to the downstream applications such as methanol synthesis and Fischer-Tropsch synthesis, and possibly also for hydrogen production with disposal of CO₂
- The oxygen consumption may be reduced while achieving similar or better performance.
- The outlet temperature from the reformer may be reduced considerably, which simplifies cooling and steam generation, and not least reduces the need for combustion and thereby supply of expensive oxygen.
- Corrosion problems such as metal dusting are reduced considerably.
- Certain applications may utilise air as a source of oxygen for the reformer.

The invention will be explained in greater detail below, with reference to the accompanying drawings, in which:
- Fig. 1: shows a section through a reformer according to the present invention;
- Fig. 2: shows a cross section of a possible arrangement of ceramic tubular membranes for collection of hydrogen;
- Fig. 3: shows longitudinal sections through various alternatives for the ceramic tubular membranes;
- Fig. 4: shows the outlet temperature from the reformer as a function of the O₂/C ratio at different steam/C ratios for conventional ATR and for the present reformer at 90% and 95% internal H₂ removal;
- Fig. 5: shows the hydrocarbon conversion (%C) as a function of the O₂/C ratio at different steam/C ratios for conventional ATR and for the present reformer at 90% and 95% internal H₂ removal;
- Fig. 6: shows the overall hydrogen production as a function of the O₂/C ration at different steam/C ratios for conventional ATR and for the present reformer at 90% and 95% internal H₂ removal;
- Fig. 7: shows stoichiometric numbers (SN = (P_{H2} - P_{CO2})/(P_{CO}+ P_{CO2})) in the outlet gas after this has been combined with the produced hydrogen, as a function of the O₂/C ratio at different steam/C ratios for conventional ATR and for the present reformer at 90% and 95% internal H₂ removal;
- Fig. 8: shows stochiometric numbers in the outlet gas, where 5% of the outlet gas has been removed from the stream and where the rest has been combined with the produced hydrogen, as a function of the O₂/C ratio at different steam/C ratios for conventional ATR and for the present reformer at 90% and 95% internal H₂ removal; and
- Fig. 9: shows the molar ratio of H₂/CO in the retentate as a function of the O₂/C ratio at different steam/C ratios for conventional ATR and for the present reformer at 90% internal H₂ removal.

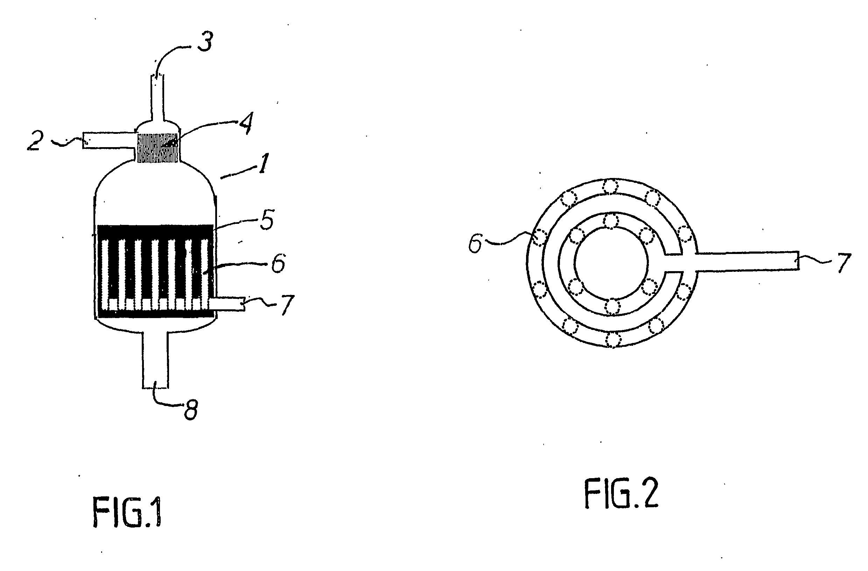

Figure 1 shows a longitudinal section through a reformer according to the present invention. The hydrocarbon feed is fed to the reformer 1 through hydrocarbon inlet 2. In the reformer shown, water vapour is also introduced with the hydrocarbon feed, however the reformer may have a separate inlet for water vapour. Oxygen is supplied through oxygen inlet 3. Here and in the rest of the description and the claims, "oxygen" is taken to mean air, oxygen-enriched air or oxygen, unless something else is clearly stated.

The supplied reaction mixture comprising the hydrocarbon feed, the water vapour and the oxygen is heated in a catalyst free burner 4, in which partial oxidation and partial reforming of the reaction mixture takes place. The temperature in the catalyst free burner may be 2000 °C or more in parts of the gas phase, all depending on the composition of the reaction mixture.

The partially oxidised and partially reformed reaction mixture is led further from the burner 4 to a catalyst bed 5 containing a reforming catalyst such as nickel on alumina or calcined Ni-hydrotalsite.

The catalyst in the catalyst bed 5 is packed around one or more tubular, semipermeable membranes 6 that are permeable to hydrogen but only to a small degree to the remaining gases in the reaction mixture.

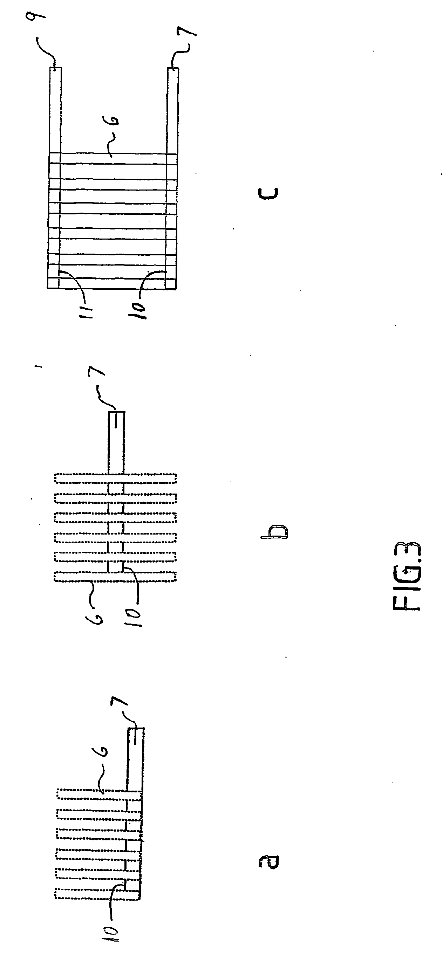

The configuration of tubular, semipermeable membranes 6 may be different from one reactor to the next, and some such alternatives are indicated in Figures 2 and 3. However the exact configuration of the tubular, semipermeable membranes is not critical, as many other alternative configurations may also be used. In the embodiments shown in Figures 2 and 3, the tubular, semipermeable membranes 6 run essentially vertically and are arranged in concentric circles. The tubular, semipermeable membranes are connected to a collecting pipe 10 that passes the collected hydrogen to a hydrogen outlet 7.

The tubular, semipermeable membranes 6 may be configured so as to allow an inert gas to flow through, as shown in Figure 3c, or without the possibility of such through-flow, as shown in Figures 3a and b. By using the through-flow type in which the hydrogen is removed from the interior of the tubes, the partial pressure of hydrogen is reduced, which increases the driving force for hydrogen through the membrane. Without through-flow, the driving force through the membrane will for the most part be provided by the pressure difference between the interior of the reformer and the interior of the tubes 6. The inert gas may for instance be nitrogen or CO₂. Nitrogen will normally be available, as it is a by-product in cryogenic production of oxygen.

Due to the high temperatures in the reformer, the tubular, semipermeable membranes 6 are preferably made from ceramic materials. However the invention is not limited to this, and any material that has the required selectivity and permeability for hydrogen, while fulfilling the physical requirements for stability and strength, may be used.

In a reformer in which the tubular, semipermeable membranes 6 are configured so that a gas may flow through the tubes 6, an inlet 9 for this gas is provided along with a distributing pipe 11 similar to the collecting pipes 10 in the catalyst bed 5.

That part of the gas which does not pass through the semipermeable membranes, the retentate or synthesis gas, is extracted from the reformer through an outlet 8 and then passed on to the downstream application.

The excess heat in the retentate or synthesis gas is used to heat gas streams or process stages that require heat input, such as e.g. the production of water vapour or the heating of oxygen and/or hydrocarbon feed to the reformer or the shell side of a gas heated reformer (GHR).

By adjusting the stochiometric ratios between the hydrocarbon feed, the water vapour and the oxygen that is fed to the reactor, and also adjusting the extraction of hydrogen through the semipermeable membrane, the equilibrium of the reaction mixture may be adjusted in a manner such that the outlet gas from the reactor has a composition that, possibly following addition of all or part of the extracted hydrogen, is suitable for the intended use of the outlet gas. Thus the composition of the outlet gas may e.g. be optimised for Fischer-Tropsch synthesis or methanol production, or the CO₂ content may be optimised so as to leave the outlet gas containing mainly CO₂, for instance for injection into a reservoir.

Simulations were carried out by using a standard simulation tool for process chemistry (HYSYS) at different conditions.

The simulations are based on the assumption that equilibrium has been reached when the reaction products leave the reformer. This assumption will be approximately correct with a suitable design and catalyst charge. It is further assumed that the reformer is adiabatic, i.e. without heat loss. As such, the outlet temperature is calculated on the basis of the chemical reactions involved and the inlet temperature of the feed gas.

Furthermore, the assumption has been made that the hydrocarbon feed has a composition that corresponds to a realistic natural gas, i.e. (in mole %): 2.5 % CO₂, 82% C₁, 9.0% C₂, 5.0% C₃, 1.0% C₄ and 0.5% C₅ hydrocarbons. It is assumed that this hydrocarbon feed, prior to being introduced into the reformer, goes through prereforming in which higher hydrocarbons are converted to methane and CO₂ in reaction with water vapour. This is however not obligatory, as the principles described herein apply to any natural gas mixture, prereformed or not. It may also be possible to reform higher hydrocarbons directly.

The addition of natural gas has been set at 2.0 MMSm³/day in order to exemplify a methanol plant on a global scale (approx. 2500 tons of methanol/day). This will correspond to the use of one ATR reactor, or possibly a few reactors, all depending on the plant design. A higher or lower capacity can be achieved by adjusting the size of the reformer or reformers.

The majority of the simulations were carried out at an absolute pressure of 80 bar. This is higher than the normal operating pressure of an ATR reformer of 30 to 40 bar. The optimum pressure must be calculated especially for each individual process. A high ATR pressure may be advantageous, as it will utilise the presumed high pressure of the natural gas feed, and the pressure of the produced hydrogen and the synthesis gas will be high, so that compression of these gases for downstream processes becomes unnecessary, or the need for this is reduced. Furthermore, it will be possible to achieve a higher driving force for separation of hydrogen through the membrane when at a higher pressure. These benefits must be balanced against a higher reactor cost due to the thicker reactor walls.

**Table 1**

| ATR with a selective membrane. The hydrocarbon feed is 2.0 MMSm³/day of natural gas that has been prereformed and has an inlet temperature of 630 °C and a pressure of 80 bar. The oxygen is supplied at 300 °C and an O₂/C ratio of 0.5. | | | | | | | |
|---|---|---|---|---|---|---|---|
| | 90% hydrogen extraction through membrane | | | | Conventional ATR | | |
| S/C (steam/carbon) | 0.5 | 1.5 | 3.0 | | 0.5 | 1.5 | 3.0 |
| Outlet temperature from ATR (°C) | 1018 | 1012 | 940 | | 1101 | 1016 | 943 |
| Hydrocarbon conversion (%C) | 99.5 | 100.0 | 100.0 | | 93.3 | 93.5 | 93.3 |
| H₂ permeate (MMSm³/day) | 4.58 | 5.36 | 5.75 | | 0 | 0 | 0 |
| Dry synthesis gas (MMSm³/day) | 3.00 | 3.07 | 3.12 | | 6.56 | 6.96 | 7.37 |

| *Composition of dry synthesis gas (volume%)* | | | | | | | |
|---|---|---|---|---|---|---|---|
| H₂ | 17.4 | 19.3 | 20.5 | | 62.2 | 64.4 | 66.3 |
| CO | 53.4 | 26.2 | 11.8 | | 30.8 | 23.4 | 16.4 |
| CO₂ | 28.7 | 28.7 | 67.7 | | 4.5 | 9.9 | 15.0 |
| CH₄ | 0.4 | 0.0 | 0.0 | | 2.5 | 2.3 | 2.2 |

**Table 2**

| ATR with a hydrogen selective membrane. Conditions as per Table 1, except that the oxygen is supplied at an O₂/C ratio of 0.4. | | | | | | | |
|---|---|---|---|---|---|---|---|
| | 90% hydrogen extraction through membrane | | | | 60% hydrogen extraction through membrane | | |
| S/C (steam/carbon) | 0.5 | 1.5 | 3.0 | | 0.5 | 1.5 | 3.0 |
| Outlet temperature from ATR | 848 | 775 | 721 | | 940 | 868 | 807 |
| Hydrocarbon conversion (%C) | 85.8 | 92.6 | 97.5 | | 81.3 | 84.9 | 88.1 |
| H₂ permeate (MMSm³/day) | 4.11 | 5.38 | 6.11 | | 2.34 | 2.86 | 3.28 |
| Dry synthesis gas (MMSm³/day) | 2.94 | 3.08 | 3.15 | | 4.04 | 4.38 | 4.66 |

| *Composition of dry synthesis gas (volume%)* | | | | | | | |
|---|---|---|---|---|---|---|---|
| H₂ | 15.7 | 19.5 | 21.4 | | 37.7 | 43.4 | 46.8 |
| CO | 43.4 | 17.5 | 7.0 | | 37.0 | 22.6 | 12.9 |
| CO₂ | 28.9 | 57.0 | 69.6 | | 12.8 | 25.4 | 33.9 |
| CH₄ | 12.0 | 6.0 | 2.0 | | 11.5 | 8.6 | 6.4 |
| H₂/CO | 0.36 | 1.11 | 3.06 | | 1.05 | 1.92 | 3.63 |

| *Stochiometric number (SN) in combined permeate and retentate* | | | | | | | |
|---|---|---|---|---|---|---|---|
| SN | 1.77 | 1.85 | 1.89 | | 1.68 | 1.74 | 1.78 |

**Table 3**

| ATR with a hydrogen selective membrane. Conditions as per Table 1a, except that oxygen is supplied at an O₂/C ratio of 0.3. | | | | | | | |
|---|---|---|---|---|---|---|---|
| | 90% hydrogen extraction through membrane | | | | Conventional ATR | | |
| S/C (steam/carbon) | 0.5 | 1.5 | 3.0 | | 0.5 | 1.5 | 3.0 |
| Outlet temperature from ATR | 780 | 691 | 626 | | 933 | 863 | 805 |
| Hydrocarbon conversion (%C) | 68.2 | 76.1 | 83.3 | | 60.0 | 62.2 | 64.3 |
| H₂ permeate (MMSm³/day) | 3.36 | 4.58 | 5.39 | | 0 | 0 | 0 |
| Dry synthesis gas (MMSm³/day) | 2.85 | 2.99 | 3.08 | | 5.09 | 5.64 | 6.12 |

| *Composition of dry synthesis gas (volume%)* | | | | | | | |
|---|---|---|---|---|---|---|---|
| H₂ | 13.0 | 17.0 | 19.4 | | 51.3 | 56.0 | 59.5 |
| CO | 30.6 | 9.6 | 3.6 | | 23.0 | 15.1 | 9.4 |
| CO₂ | 28.8 | 53.5 | 63.5 | | 6.3 | 12.3 | 16.7 |
| CH₄ | 27.6 | 19.9 | 13.4 | | 19.4 | 16.6 | 14.5 |

**Table 4**

| ATR with a hydrogen selective membrane. Conditions as per Table 1, except that oxygen is supplied at an O₂/C ratio of 0.4, and the pressure has been regulated to 40 bar. | | | | | | | |
|---|---|---|---|---|---|---|---|
| | 90% hydrogen extraction through membrane | | | | Conventional ATR | | |
| S/C (steam/carbon) | 0.5 | 1.5 | 3.0 | | 0.5 | 1.5 | 3.0 |
| Outlet temperature from ATR | 812 | 754 | 731 | | 962 | 886 | 833 |
| Hydrocarbon conversion (%C) | 88.2 | 95.7 | 99.4 | | 80.6 | 83.0 | 85.1 |
| H₂ permeate (MMSm³/day) | 4.27 | 5.64 | 6.27 | | 0 | 0 | 0 |
| Dry synthesis gas (MMSm³/day) | 2.95 | 3.10 | 3.17 | | 6.12 | 6.73 | 7.30 |

| *Composition of dry synthesis gas (volume%)* | | | | | | | |
|---|---|---|---|---|---|---|---|
| H₂ | 16.0 | 20.1 | 21.9 | | 59.5 | 63.1 | 66.0 |
| CO | 45.5 | 18.3 | 7.6 | | 27.5 | 19.6 | 13.2 |
| CO₂ | 28.5 | 58.2 | 70.1 | | 5.1 | 11.0 | 15.8 |
| CH₄ | 9.9 | 3.4 | 0.4 | | 7.9 | 6.3 | 5.0 |
| H₂/CO | 0.35 | 1.10 | 2.88 | | 2.16 | 3.22 | 5.00 |

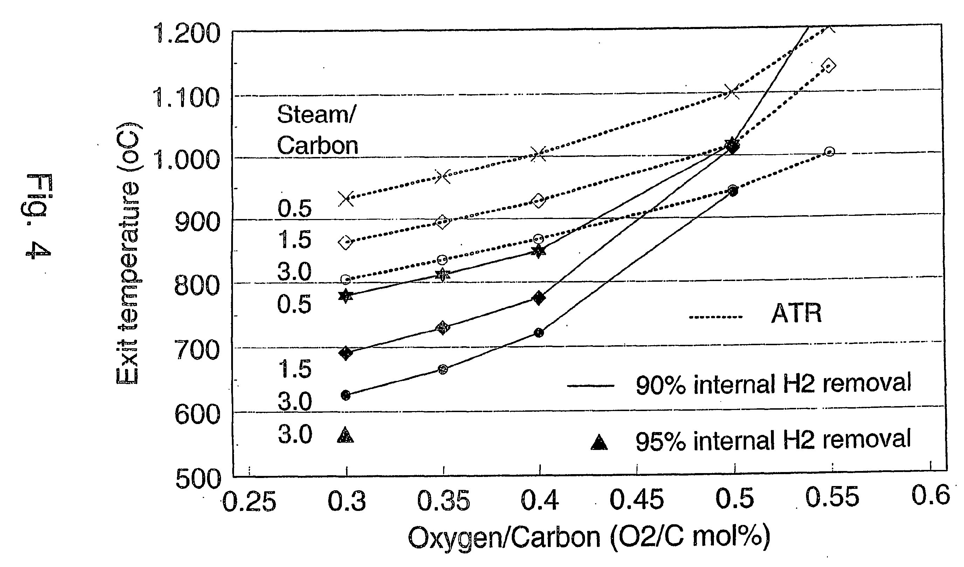

Figures 4 to 9 show the outlet temperature, the hydrocarbon conversion, the overall production of hydrogen, stochiometric number and H₂/CO ratio respectively of the retentate as a function of the O₂/C ratio (mole ratio). The O₂/C ratio is a commercially significant parameter, as the production of oxygen through normal cryogenic techniques is expensive.

In some cases it can be advantageous to add air or possibly oxygen enriched air as a source of oxygen. This is particularly applicable when nitrogen is part of the downstream application, such as in the production of e.g. ammonia or a hydrogen/nitrogen fired power station.

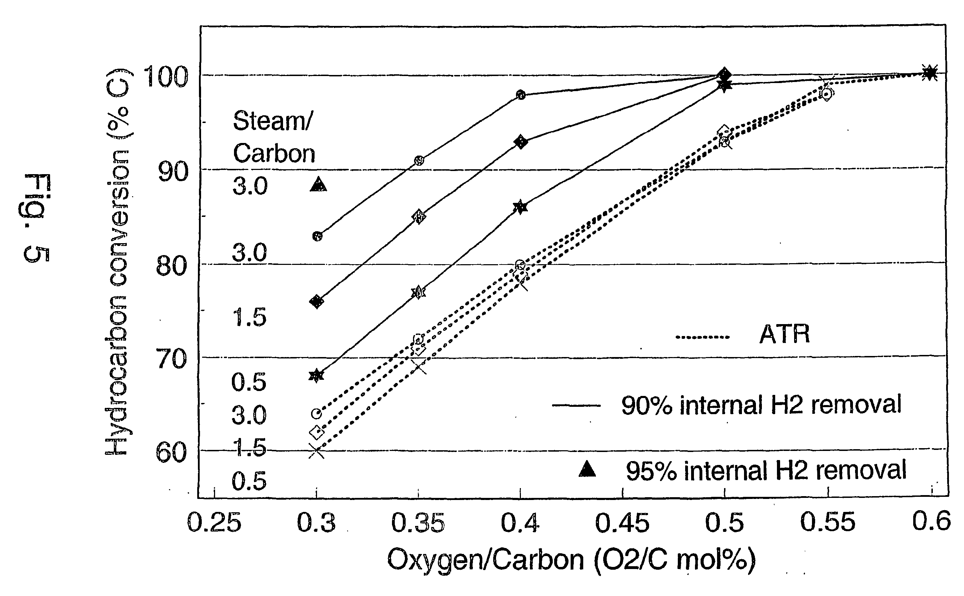

In Figures 4 and 5, it emerges that when the oxygen supply is reduced, both the outlet temperature and the hydrocarbon conversion fall. In other words, a certain amount of oxygen must be supplied to an autothermal reformer in order for the conversion of natural gas to synthesis gas to take place.

The advantage and significance is that a much higher hydrocarbon conversion may be achieved at a given O₂/C ration if hydrogen is removed internally in the reformer. Significant savings in the oxygen production may therefore be realised. As an example, at an S/C ratio of 3.0 and an oxygen/carbon ratio of 0.4, removal of 90% of the hydrogen internally in the reactor gives a hydrocarbon conversion of 97.7%, as compared with 79.9% for a conventional ATR. Another significant observation is that the advantage of increasing the S/C ratio is enhanced considerably through internal removal of hydrogen. The individual points of Figure 4 and 5 for removal of 95% of the hydrogen illustrate the fact that it appears to be possible to extrapolate this effect.

A further result of the higher conversion at an O₂/C ratio < approx. 0.5 is that the outlet temperature is reduced. At e.g. 90% extraction of hydrogen, an S/C ratio of 3.0 and an O₂/C ratio of 0.4, the outlet temperature is 721°C, compared with well over 1000 °C for conventional ATR when the O₂/C ratio is adjusted so as to give a conversion of more than 95%. This allows a reduction in size, and possibly simplification of, expensive and complicated systems of gas cooling and heat recovery. It is also envisaged that the frequent occurrence of problems regarding corrosion and metal dusting may be managed in a simpler manner. Such metal dusting occurs when Boudard's reaction:

2CO → C + CO₂

is favoured, as carbon may then be deposited between the grains of the metal, breaking metal particles up and away from the metal surface.

The tables show that the CO₂/CO ratio in the produced synthesis gas according to the present invention increases considerably when compared with synthesis gas from conventional ATR, even when only 60% of the produced hydrogen is removed internally in the reformer. The equilibrium of the above reaction formula will then shift to the left, thus resulting in a lesser degree of metal dusting. It may therefore in all probability be possible to choose more standard construction materials, e.g. as regards steel quality.

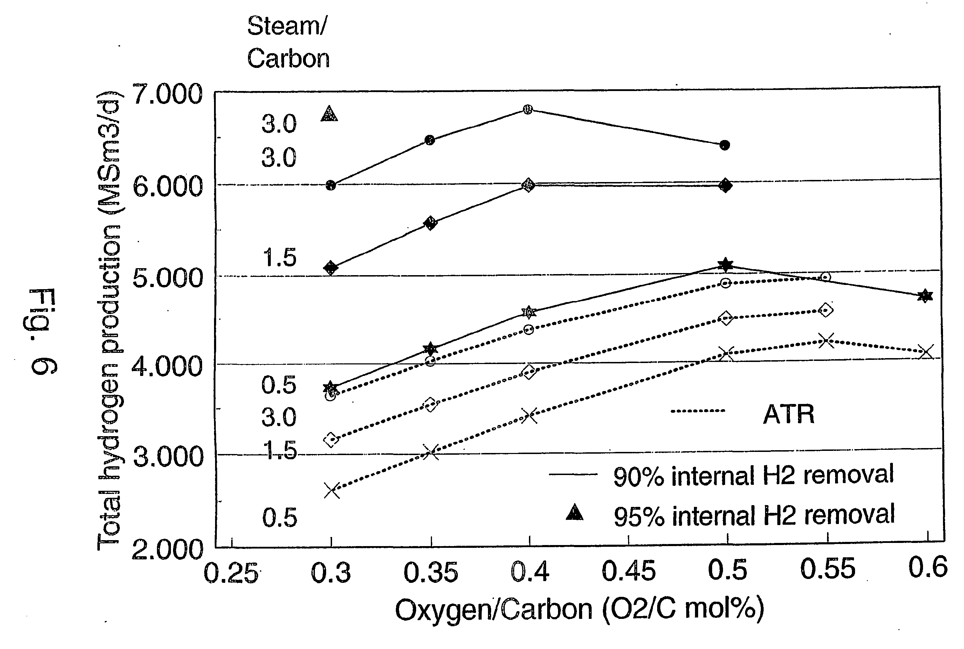

As a result of the higher levels of carbon conversion and the change in the equilibrium in the ATR reformer towards more selective conversion of the hydrocarbon feed to hydrogen and CO₂, more hydrogen is produced by the present method. Figure 6 illustrated that the maximum overall production of hydrogen can be increased from nearly 5 MMSm³/day to 6 MMSm³/day, or by 20%, even with a 20% reduction in the oxygen consumption. The theoretical maximum production of hydrogen with the feed composition and volume as described, is 9 MMSm³/day for complete stochiometric conversion. As is evident from tables 1 to 3, it is also possible to increase the hydrogen production by 10% at only 60% internal removal of hydrogen from the reformer, with a 20% reduction in oxygen consumption.

It can be seen from Figure 6 (O₂/C=0.3) that, if a membrane that is permeable to hydrogen and has sufficient selectivity and through-flow capability to increase the production of hydrogen permeate to 95% of the total hydrogen volume can be provided, the maximum hydrogen production can be maintained at 6.8 MMSm³/day even at an even lower consumption of oxygen. In this case the retentate will consist of 76% CO₂, 11% CH₄ and 12% H₂, i.e. a gas with a low calorific value which will probably be used for generation of steam or power. The composition appears interesting for carbon sequestering and disposal. The use of catalytic combustion will reduce the need for excess oxygen or air, and the remaining oxygen in the outlet gas can be reduced to a very low level, possibly in the ppm-range or lower, which is in accordance with specifications for avoidance of corrosion in injection wells. It is obvious that going further than 95% hydrogen removal or increasing the O₂/C ratio will increase the CO₂ level even further at the expense of methane and, in the former case, also CO.

The present reformer may be put to use in several areas of application. Without being exhaustive, the following three major applications may be mentioned as way of example:

### 1. Production of hydrogen

If the present invention is primarily used to produce hydrogen, one possibility will be to remove the bulk of the CO₂ from the outlet gas or retentate from the reformer and recycle the rest through ATR. Depending on the selectivity of the membrane, the produced hydrogen will have a purity that is considerably higher than the purity of hydrogen from conventional gas reforming. In an ammonia production plant, this means that the high temperature shift reactor can be omitted, and possibly also low temperature shift reaction and methanising. By using the hydrogen in power generation in order to reduce CO₂ emissions, there will probably be no need for after-treatment of the hydrogen. Even for purposes requiring a high purity, such as e.g. fuel cells for cars and other vehicles, the purification may be simplified.

### 2. Production of synthesis gas for methanol production

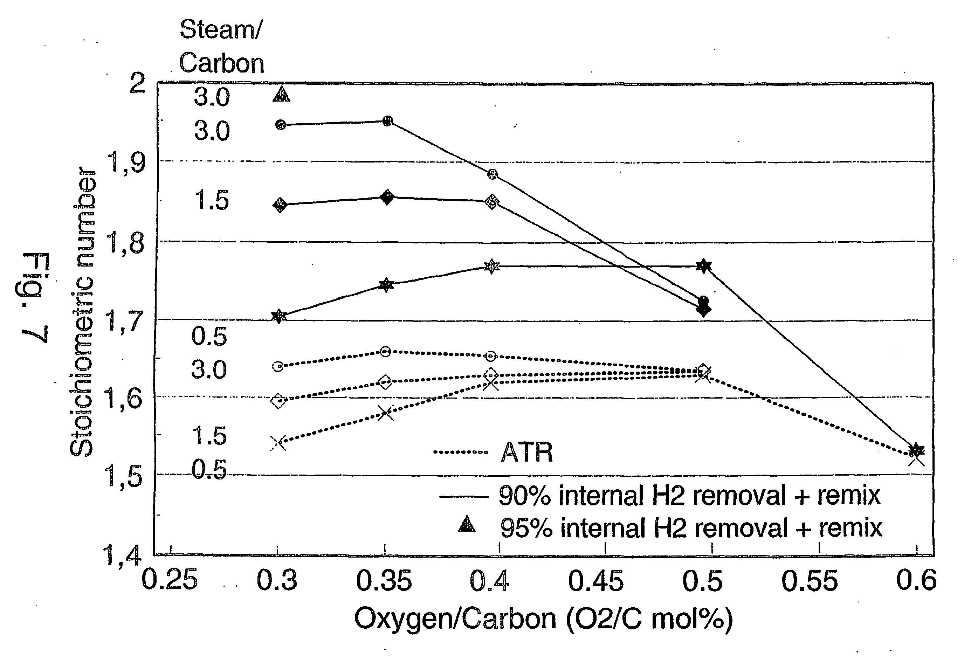

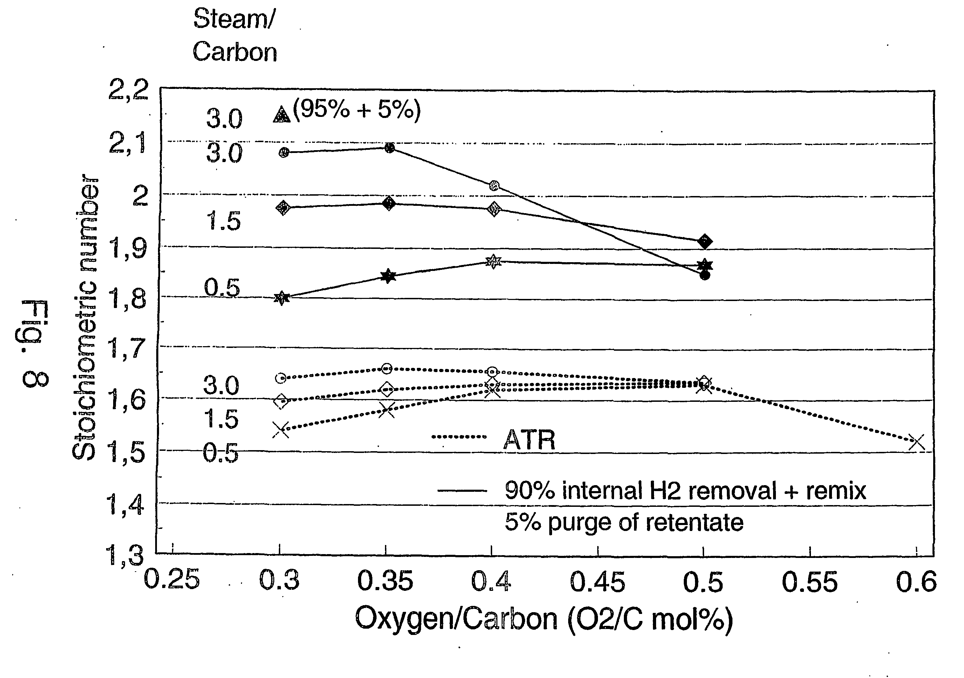

The theoretical stochiometric number (SN) for production of methanol is 2.0. In practice, this number must be somewhat higher, e.g. 2.05 to 2.1. The reason for this high stochiometric number is that the actual synthesis of the methanol is driven by a high backflow of non-converted hydrogen, and as it is necessary to purge this stream in order to prevent accumulation of inert gases, some hydrogen is also released. Another reason for the desired SN not being achievable through conventional ATR is that the feed gas is very rarely pure methane. This can be clearly seen from Figure 7, where the maximum SN is 1.66. It is therefore difficult at present to use ATR for methanol production without adding a steam reformer in order to supply additional hydrogen, i.e. combined reforming. Again, the membrane permeable to hydrogen is advantageous in that the SN of the combined retentate and permeate is greatly increased, even though values above 2.0 are not achieved. The required level may however be achieved by purging some of the retentate, for instance 5% as shown in Figure 8. Thus it is possible to produce methanol by the present reformer and method without having to add a costly steam reformer. It is thus envisaged that both the carbon efficiency and the energy efficiency will increase significantly.

### 3. Production of synthesis gas for the Fischer-Tropsch synthesis (FT)

The Fischer-Tropsch synthesis is used for production of linear alkenes and alkanes from a carbon source such as natural gas. CO₂ is not active in the FT reaction, and theoretically the requirement for production of long chain alkanes is that the ratio between H₂ and CO in the feed gas to the FT reactor is 2. If wax is produced, which is hydroisomerised further into fuel in the diesel range, an H₂/CO ratio of around 2.05 may be suitable.

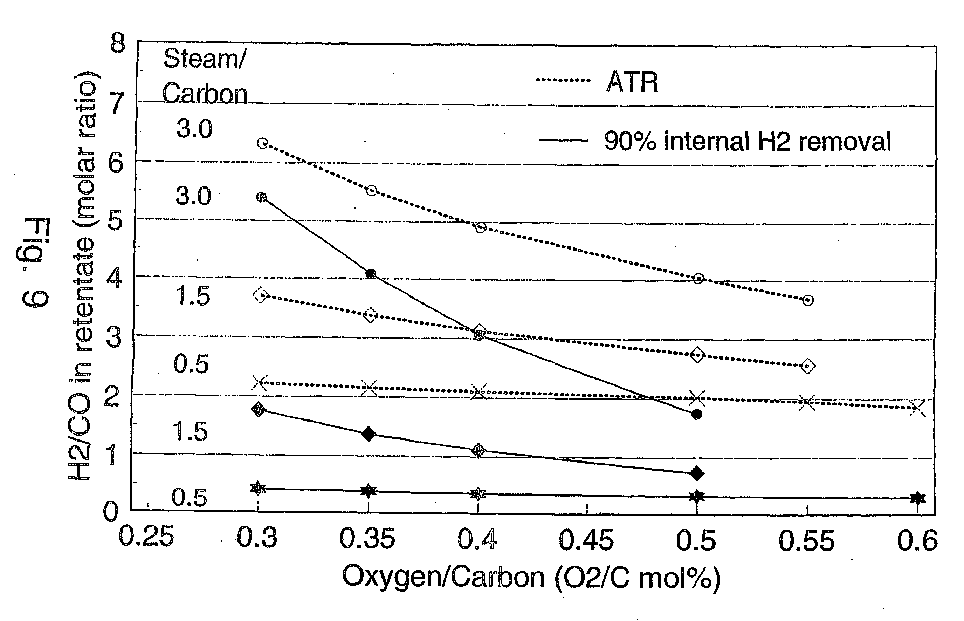

The selectivity of the FT process for production of wax by use of a modem Co based catalyst is such that an under-stochiometric feed to the FT reactor is preferred, e.g. with the H₂/CO ratio in the range 1.4 to 1.8. As can be seen from Figure 9, it is impossible for a conventional ATR process to achieve values below 2.0 without reducing the S/C ratio to 0.5 or less, i.e. well below the level required in order to prevent coking. For an ATR with a hydrogen selective membrane on the other hand, it is clear from Figure 9 that it is easy to achieve any H₂/CO ratio, even with an suitable S/C ratio, a high conversion of the feed and a reduced oxygen consumption. In addition, large quantities of hydrogen will be produced in the form of permeate.

Such a process concept may be suitable for a modem refinery where extra hydrogen is needed for removal of sulphur and reduction of olefins and aromatics in fuels. However the hydrogen production does not give equally high levels of CO₂ in the synthesis gas.

As the stoichiometric requirements of the FT reaction appear to be easier to fulfil than those of methanol production, one possibility seems to be to run the present ATR with hydrogen membranes in a more relaxed manner. Table 2 includes data for removal of only 60% of the produced hydrogen for an O₂/C ratio of 0.4. Here it is evident that the desired H₂/CO ratio may be achieved by setting the steam supply at an S/C ratio of between 1.0 and 1.5. Furthermore, the formation of CO₂ is also reduced significantly, while the conversion of the feed has fallen from typically 93% to 85%. Here, it may be better to run the ATR reactor in order to provide synthesis gas for an FT reactor at somewhat higher levels of oxygen if the hydrogen permeate is around 50% of the total hydrogen, as exemplified in Table 5 below.

**Table 5**

| ATR with hydrogen selective membrane for various extraction levels. Conditions as per Table 1, except that the pressure is 40 bar. | | | | | | | | |
|---|---|---|---|---|---|---|---|---|
| Hydrogen extraction (%) | 0 | | 40 | | 60 | | 90 | |
| Steam/carbon (S/C) | 1.5 | 2.0 | 1.5 | 2.0 | 1.5 | 2.0 | 1.5 | 2.0 |
| Outlet temperature from ATR (°C) | 987 | 963 | 979 | 957 | 982 | 962 | 1042 | 1016 |
| Hydrocarbon conversion (%C) | 96.7 | 96.8 | 98.5 | 98.7 | 99.4 | 99.5 | 100 | 100 |
| H₂ permeate (MMSm³/day) | 0 | 9 | 2.04 | 2.11 | 3.19 | 3.32 | 5.34 | 5.53 |
| Dry synthesis gas (MMSm³/day) | 7.22 | 7.39 | 5.44 | 5.65 | 4.61 | 4.70 | 3.07 | 3.09 |

| *Composition of dry synthesis gas (volume%)* | | | | | | | | |
|---|---|---|---|---|---|---|---|---|
| H₂ | 65.7 | 66.4 | 55.1 | 56.1 | 46.3 | 47.5 | 19.2 | 19.8 |
| CO | 23.5 | 20.8 | 27.6 | 23.7 | 29.7 | 25.0 | 26.9 | 20.1 |
| CO₂ | 9.7 | 11.7 | 16.6 | 19.6 | 23.7 | 27.6 | 53.9 | 60.1 |
| CH₄ | 1.1 | 1.1 | 0.7 | 0.6 | 0.3 | 0.2 | 0 | 0 |
| H₂/CO | 2.80 | 3.19 | 2.00 | 2.37 | 1.56 | 1.89 | 0.71 | 0.99 |

## Claims

1. A reactor for reforming a feed gas comprising natural gas and/or a prereformed natural gas, water vapour and an oxygen-containing gas, where the reactor comprises a catalyst bed for autothermal reforming of the feed gas, in which catalyst bed is disposed a membrane that is permeable to hydrogen, the purpose of which is to separate the gas stream flowing through the catalyst bed into a first stream primarily containing H₂ and a second, low hydrogen stream primarily containing CO₂, water vapour and CO, in addition to any inert gases and some unconverted feed gas, **characterised in that** the reactor also comprises a catalyst free zone for heating of the incoming feed gas through partial combustion of the feed gas before this reaches the catalyst bed.

2. The reactor according to claim 1, **characterised in that** the catalyst bed is packed around one or more tubular, semipermeable membranes that are permeable to hydrogen.

3. The reactor of claim 2, **characterised in that** the tubular, semipermeable membranes run essentially vertically and are arranged in concentric circles.

4. The reactor according to claim 2 or 3, **characterised in that** the tubular, semipermeable membranes are made of ceramic materials.

## Patentansprüche

1. Reaktor zum Reformieren eines Betriebsgases, umfassend Erdgas und/oder ein vorreformiertes Erdgas, Wasserdampf und ein Sauerstoff enthaltendes Gas, wo der Reaktor ein Katalysatorbett zum autothermischen Reformieren des Betriebsgases umfasst, in welchem Katalysatorbett eine Membran angeordnet ist, die für Wasserstoff durchlässig ist, deren Zweck es ist, den durch das Katalysatorbett fließenden Gasstrom in einen ersten, primär H₂ enthaltenden Strom und einen zweiten wasserstoffarmen Strom, welcher primär CO₂, Wasserdampf und CO zusätzlich zu inerten Gasen und etwas nicht umgewandeltem Betriebsgas enthält, **dadurch gekennzeichnet, dass** der Reaktor ebenfalls eine Katalysatorfreie Zone zum Erhitzen des hereinkommenden Betriebsgases durch teilweise Verbrennung des Betriebsgases umfasst, bevor dieses das Katalysatorbett erreicht.

2. Reaktor gemäß Anspruch 1, **dadurch gekennzeichnet, dass** das Katalysatorbett um eine oder mehrere röhrenförmige, halbdurchlässige Membranen gepackt ist, die für Wasserstoff durchlässig sind.

3. Reaktor nach Anspruch 2, **dadurch gekennzeichnet, dass** die röhrenförmigen, halbdurchlässigen Membranen im Wesentlichen vertikal verlaufen und in konzentrischen Kreisen angeordnet sind.

4. Reaktor gemäß Anspruch 2 oder 3, **dadurch gekennzeichnet, dass** die röhrenförmigen, halbdurchlässigen Membranen aus keramischen Materialien gemacht sind.

## Revendications

1. Réacteur pour le reformage d'un gaz d'alimentation contenant du gaz naturel et/ou du gaz naturel préreformé, de la vapeur d'eau et du gaz oxygéné, ledit réacteur comprenant un lit catalytique pour un reformage autothermique du gaz d'alimentation, lit catalytique dans lequel est disposée une membrane perméable à l'hydrogène, dont le but est de séparer le flux gazeux s'écoulant le long du lit catalytique en un premier flux contenant principalement du H₂ et en un second flux d'hydrogène contenant principalement du CO₂, de la vapeur d'eau et du CO, en plus de tout gaz inerte et d'une quantité de gaz d'alimentation non converti, **caractérisé en ce que** le réacteur comprend en outre une zone exempte de catalyseur pour chauffer le gaz d'alimentation entrant au moyen de la combustion partielle du gaz d'alimentation avant qu'il n'atteigne le lit catalytique.

2. Réacteur selon la revendication 1, **caractérisé en ce que** le lit catalytique entoure une ou plusieurs membranes semi-perméables tubulaires qui sont perméables à l'hydrogène.

3. Réacteur selon la revendication 2, **caractérisé en ce que** les membranes semi-perméables tubulaires s'étendent essentiellement verticalement et sont disposées en cercles concentriques.

4. Réacteur selon la revendication 2 ou 3, **caractérisé en ce que** les membranes semi-perméables tubulaires sont fabriquées en matériaux céramiques.
